# FASCICULE DE BREVET EUROPEEN

(11) **EP 2 915 202 B1**
(45) Date de publication et mention de la délivrance du brevet: **14.06.2017**
(21) Numéro de dépôt: 13791758.9
(22) Date de dépôt: 31.10.2013
(51) Int. Cl.: H01M 2/10, H01M 10/60, H01M 10/625, H01M 10/613, H01M 10/658, H01M 10/06

(54) **ENVELOPPE DE PROTECTION THERMIQUE DE BATTERIE POUR VEHICULE AUTOMOBILE**
WÄRMESCHUTZGEHÄUSE FÜR EINE KRAFTFAHRZEUGBATTERIE
THERMAL PROTECTION CASE FOR A MOTOR VEHICLE BATTERY

(30) Priorité: 31.10.2012 FR 1260435
(43) Date de publication de la demande: 09.09.2015
(73) Titulaire: Renault S.A.S., 92100 Boulogne-Billancourt (FR)
(72) Inventeur: GUIGNARD, Fabrice, F-78280 Guyancourt (FR); JAGLIN, François, F-78470 Saint Remy les Chevreuse (FR); CADORET, Sébastien, F-92120 Montrouge (FR)
(86) Numéro de dépôt international: PCT/EP2013/072760
(87) Numéro de publication internationale: WO 2014/068025

(56) Documents cités:
- DE-A1- 19 752 755
- GB-A- 2 087 636
- US-A- 4 006 280
- US-A- 5 681 668

## Description

La présente invention se rapporte à l'enveloppe et au couvercle d'une boîte de protection thermique pour batterie. Elle peut être appliquée, par exemple, aux batteries destinées aux véhicules terrestres. De telles enveloppes sont par exemple déjà connues des documents suivants GB2087636, US5681668, US4006280 ou encore DE19752755. Une boîte de protection thermique appelée couramment boîte froide a pour fonction de protéger la batterie de l'échauffement généré par la chaleur du moteur.

Cette boîte de protection thermique peut être composée de trois parties : un socle ou embase sur lequel repose le corps de la batterie, un couvercle destiné à fermer la boîte de protection thermique et une enveloppe latérale de protection thermique.

On entend par enveloppe de protection thermique l'élément comprenant quatre parois accolées par des bords dits de jonction. On la désigne également comme un écran ou un carter. Elle constitue l'essentiel du corps de la boîte de protection thermique.

On entend par paroi chaque face latérale de la boîte de protection thermique disposée selon un plan perpendiculaire par rapport au plan du couvercle et au plan de l'embase.

Généralement, l'enveloppe de protection thermique est directement reliée à l'embase. C'est le cas selon le brevet EP 0 676 818, où l'embase et l'enveloppe de protection thermique sont d'une pièce sous la forme d'un bac complet de maintien. Dans le brevet FR 2 898 094, le socle et l'enveloppe de protection thermique s'ajustent l'un sur l'autre par les parois latérales de l'embase. Toutefois, l'enveloppe de protection thermique est rigide et ne peut en aucun cas être pliée ni rangée sans occuper un espace important.

L'invention vise à pallier ce problème logistique en proposant un dispositif de protection thermique en matériau polymère, constitué de deux éléments séparés, un couvercle et une enveloppe de protection thermique, caractérisé en ce que l'enveloppe de protection thermique comprend au moins deux parties pliables dont la liaison est articulée autour d'une charnière, l'enveloppe pouvant passer par pliage et dépliage d'une position de rangement à une position fonctionnelle, destinée, par fixation sur le socle support batterie assurant sa forme, à recouvrir une batterie de véhicule automobile, cette dernière pouvant être de format différent suivant les caractéristiques du véhicule.

Le couvercle et l'enveloppe peuvent être installés sur le socle portant la batterie, ce dernier participant à la forme géométrique de l'enveloppe. Ils peuvent contenir plusieurs types de formats de batterie.

On entend par parties pliables des éléments de l'enveloppe de protection thermique constitués par les parois articulées autour d'une charnière, ladite charnière permettant un mouvement de pivot autour d'un axe de rotation.

Cette charnière fournit un axe de rotation à l'enveloppe de protection thermique, permettant aux bords de jonctions adjacents de se rabattre. L'enveloppe thermique telle que décrite dans l'invention doit comporter au moins une charnière et peut en comporter, deux, trois, quatre charnières ou plus, dont au moins une charnière peut être fermée par un système de verrou.

La possibilité de rabattre les différentes parties de l'enveloppe lui permet d'être empilée sans disjoindre les différentes parties de l'enveloppe, avec une grande économie d'espace.

Un mode de réalisation préféré pour l'enveloppe de protection thermique est caractérisé en ce que les bords de chaque paroi, lorsqu'ils viennent en butée, peuvent être bloqués par emboîtement par un système de verrou. L'avantage du système de verrou est d'assurer le maintien de la boîte de protection thermique par un dispositif suffisamment solide et résistant mécaniquement.

Les parois, lorsqu'elles sont en position fonctionnelle sur le véhicule, doivent former un ensemble rigide. Pour cela, il faut fixer les parois au niveau des bords de jonction par un système de verrou, au niveau des extrémités libres des bords des parois.

Selon un mode de réalisation préféré, l'enveloppe comprend quatre charnières, dont au moins deux charnières peuvent être fermées par un système de verrou.

Selon un mode de réalisation préféré, le système de verrou est un système à clips.

Selon une première variante, le système à clips est un système de picots destiné à s'emboîter dans une encoche correspondante sur la paroi adjacente opposée.

Selon une deuxième variante, le système de clips comprend sur au moins un tenon vertical ou horizontal une lamelle d'encliquetage située sur ledit tenon, ladite lamelle d'encliquetage trouvant son encoche correspondante sur la paroi adjacente. Ledit matériau polymère est du polypropylène expansé de densité inférieure ou égale à 80g/L.

En effet, à la différence du polypropylène chargé, l'utilisation du polypropylène expansé permet de réduire la masse de la boîte de protection thermique de manière conséquente, réduisant également la consommation énergétique des véhicules en étant équipés et d'améliorer l'isolation thermique de la batterie.

Certaines parties de l'enveloppe et du couvercle sont réalisées en matériau polymère (de manière particulièrement préférée, en polypropylène expansé) d'une densité inférieure ou égale à 40g/L et préformées de façon à permettre le passage d'objets entre l'intérieur et l'extérieur de la boite froide (cosses, capteurs ou autres objets) par simple déformation de la matière, sans ajout de mousse d'étanchéité.

La réalisation des pièces de l'enveloppe de protection thermique est faite de telle manière que les parois sont moulées.

Cependant, ledit matériau polymère peut également être un matériau polymère expansé et/ou thermoplastique, par exemple une autre polyoléfine.

Cette enveloppe thermique peut constituer une composante d'une boîte de protection thermique caractérisée en ce qu'elle comprend en outre un socle destiné à supporter l'élément batterie et un couvercle destiné à recouvrir l'élément batterie. L'invention concerne également une telle boîte.

L'invention concerne enfin un procédé de fabrication d'un tel dispositif de protection thermique, caractérisé en ce que le moule de forme définit au moins deux parties pliables au niveau d'une zone rétrécie destinée à former la charnière.

L'invention est décrite ci-après plus en détail à l'aide de figures ne représentant que des modes de réalisation préférés de l'invention.

Les figures 1A et 1B représentent des vues en perspective d'une boîte de protection thermique sur lesquelles ressortent les éléments principaux, à savoir l'embase 11, l'enveloppe de protection thermique 12 et le couvercle 13.

Dans la figure 2A, on considère une vue de côté des enveloppes de protection thermique à une seule charnière de pliage empilées en position de transport et de stockage.

Dans la figure 2B, on considère une vue de dessus d'une enveloppe de protection thermique à une seule charnière de pliage en position fonctionnelle, telle qu'elle est destinée à être disposée dans le véhicule et pour accueillir la batterie.

Dans la figure 2C, on considère une vue de dessus d'une enveloppe de protection thermique à quatre charnières, disposée en position fonctionnelle.

Dans la figure 2D, on considère une vue de côté d'une enveloppe de protection thermique à quatre charnières, disposée en position de pliage ou de dépliage.

Dans la figure 2E, on considère une vue de côté d'une enveloppe de protection thermique à quatre charnières, disposée à plat en position de transport. On considère une enveloppe de protection thermique à quatre charnières.

Dans la figure 3A, en vue de coupe, on représente les systèmes de verrou au niveau d'une charnière.

Dans la figure 3B, en vue en perspective, sont représentés différents systèmes de verrous proposés.

Dans la figure 3C, en vue en perspective, est représenté en perspective un autre système de verrou par lamelle à emboîtement vertical.

Dans la figure 4A, est représenté un mode de réalisation de l'enveloppe de protection thermique équipée d'une seule charnière. On distingue trois pièces principales pour le moulage et une pièce spécifique de compression des charnières.

Dans la figure 4B, en vue de coupe, est représenté un mode de réalisation de l'enveloppe de protection thermique, comportant quatre pièces principales de moulage et deux pièces de compression de charnières. L'enveloppe présente ici deux charnières.

Dans la figure 4C en vue de coupe, est représenté un mode de réalisation de l'enveloppe de protection thermique à quatre charnières et à deux verrous. On note quatre pièces principales de moulage, et quatre pièces de compression des charnières.

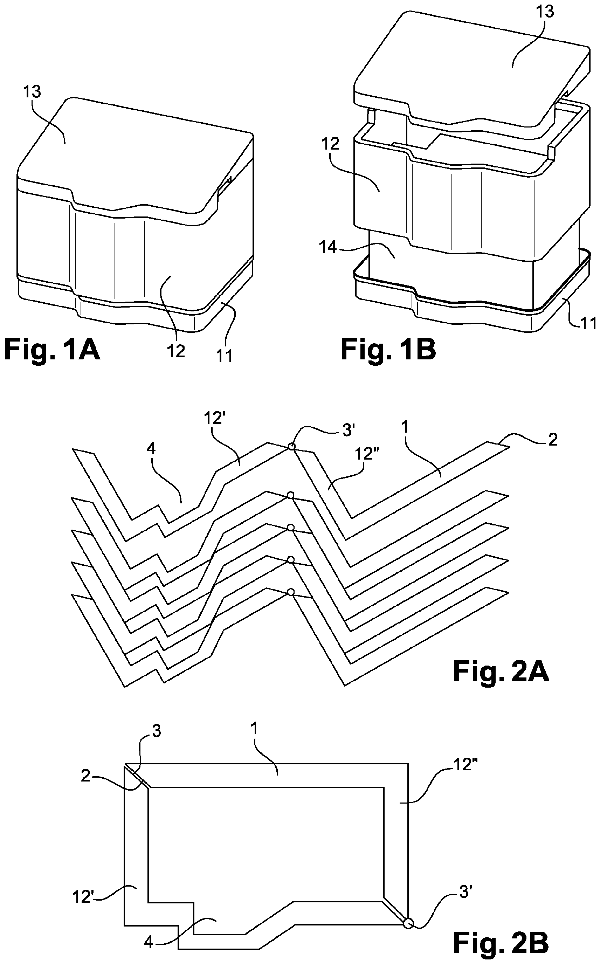

Les figures 1A et 1B représentent une boîte de protection thermique sur lesquelles ressortent les éléments principaux, à savoir le socle ou embase 11, l'enveloppe de protection thermique 12 et le couvercle 13.

Dans la figure 1A, la boîte de protection thermique est représentée en position fermée et fonctionnelle.

Dans la figure 1B, les éléments principaux de ladite boîte de protection thermique sont dissociés. On identifie en séparant les trois éléments principaux une batterie de véhicule automobile 14, reposant sur l'embase 11, et surmontée par l'enveloppe de protection thermique 12 et le couvercle 13.

La boîte de protection thermique comporte trois parties distinctes :
- l'embase 11, qui est le socle sur lequel repose la batterie,
- l'enveloppe de protection thermique 12, qui forme un écran isolant, de manière à protéger son contenant des écarts de températures, notamment des excès de température, lesdits écarts de température pouvant être la conséquence du fonctionnement d'un moteur situé à proximité.
- le couvercle 13, qui permet de fermer la boîte de protection thermique, généralement composée du même matériau isolant que l'enveloppe de protection thermique.

La figure 2A représente un empilement d'une première variante d'enveloppes de protection thermique. Sur cette figure 2A, l'enveloppe de protection thermique comporte une seule charnière 3', la charnière étant située à un des bords de jonction de l'enveloppe de protection thermique. Chaque enveloppe de protection thermique est en position dépliée. Elle a sur une de ses longueurs une excroissance 4 vers l'extérieur de l'enveloppe, formant une colonne et dont la coupe est un trapèze rectangle, en guise d'espace supplémentaire pour accueillir le dispositif de fixation de la batterie. Ainsi, une fois dépliées de la même façon, toutes les enveloppes de protection thermiques peuvent être empilées, s'emboîtant les unes sur les autres, permettant un gain d'espace important.

La figure 2B représente une même enveloppe de protection thermique à une seule charnière 3', en position fonctionnelle. L'enveloppe de protection thermique en position fonctionnelle a une structure assimilée à un parallélépipède rectangle, pour lequel les faces supérieure et inférieure sont ouvertes. L'enveloppe de protection thermique est constituée de quatre parois planes, reliées entre elles. Les parois planes 1 sont biseautées à leurs jonctions 3, de sorte qu'en position fonctionnelle, les parois adjacentes se rejoignent et viennent en butée sur leurs bords. La position fonctionnelle est celle pour laquelle les parois adjacentes sont jointes en formant un angle de 90 °.

Pour les figures 2A et 2B, l'enveloppe de protection thermique pour batterie de véhicule automobile en matériau polymère comprend deux parties pliables 12' et 12" dont la liaison est articulée autour d'une charnière, l'enveloppe pouvant passer d'une position pliée de rangement à une position dépliée fonctionnelle destinée à recouvrir une batterie de véhicule automobile.

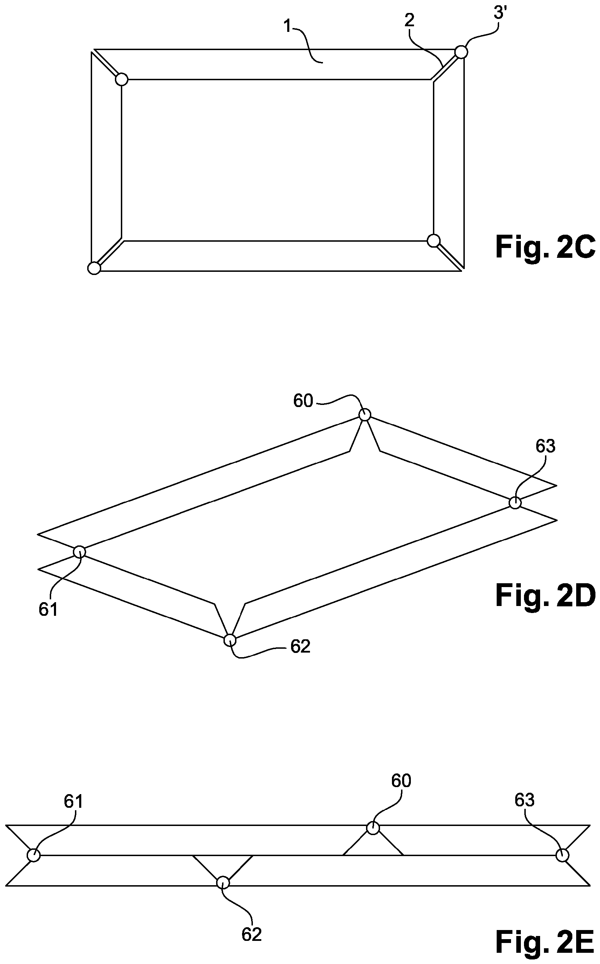

La figure 2C représente une enveloppe de protection thermique à quatre charnières, en position fonctionnelle. L'enveloppe de protection thermique en position fonctionnelle a une structure assimilée à un parallélépipède rectangle, pour lesquelles les faces supérieure et inférieure sont ouvertes. L'enveloppe de protection thermique est constituée de quatre parois planes, reliées entre elles. Les parois planes 1 forment des biseaux 2 à leurs jonctions 3, de sorte qu'en position véhicule, les parois adjacentes se rejoignent et viennent en butée sur leurs bords. La position fonctionnelle est celle pour laquelle les parois adjacentes sont jointes en formant un angle de 90 °.

La figure 2D représente la même enveloppe de protection thermique, à la différence qu'ici, elle se déplie vers la position fonctionnelle.

La figure 2E représente une enveloppe de protection thermique repliée. Elle dispose de quatre charnières, de manière alternative à l'intérieur 61 et 63 et à l'extérieur 60 et 62 de l'enveloppe de protection thermique. Cette alternance des charnières permet à l'enveloppe de se replier complètement et gagner ainsi un espace important.

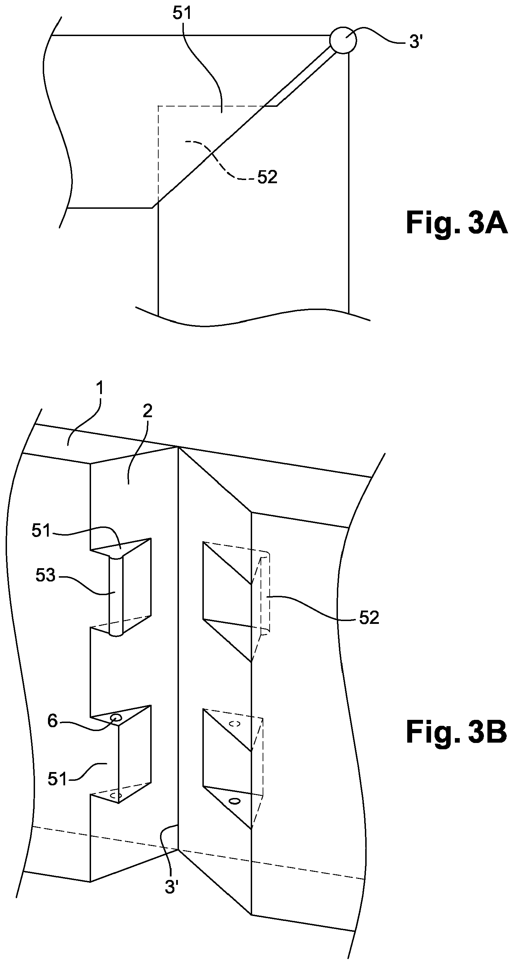

La figure 3A présente une vue en coupe supérieure d'un bord de jonction de deux parois adjacentes, reliées par un système de charnière 3' et bloqué par un système de verrou. Les parois sont jointes entre elles au niveau des biseaux de leur extrémité respective. Dans ce système, on trouve un tenon 51 au niveau du biseau 2, dans la continuité du bord interne de la paroi. Elle forme à mi- longueur du biseau un angle de 90° par rapport à la face intérieure de la paroi. Le tenon s'emboîte dans le biseau de la paroi opposée dans une encoche 52 correspondante et symétrique, que l'on distingue sur la figure 3B.

La figure 3B représente une vue en perspective d'un système de verrou à clips à picots en-dessous et à lamelle d'emboîtement au-dessus. Dans le premier système de verrou cité, le système à clips est un système de picots 6 destiné à s'emboîter dans une encoche correspondante sur la paroi adjacente opposée. Le second système de verrou à clips est un système à lamelle par emboîtement et une lamelle d'emboîtement 53 se trouve au niveau du biseau 2, dans la continuité du bord interne de la paroi. Le système de clips comprend ici sur un tenon vertical ou horizontal 51 une lamelle d'encliquetage 53 ou 81 située sur le tenon trouvant son encoche correspondante sur la paroi adjacente. Elle forme à mi-longueur du biseau un angle de 90° par rapport à la face intérieure de la paroi. Le tenon trouve dans le biseau de la paroi opposée une encoche 52 correspondante et symétrique.

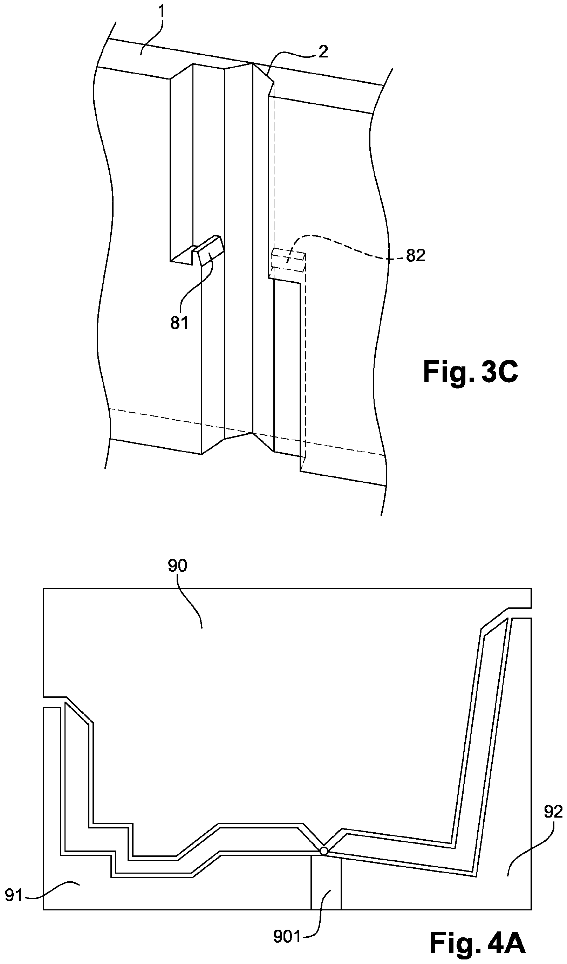

La figure 3C représente une vue en perspective d'un système de verrou à clips, incluant un sillon parallélépipédique qui peut-être creusé dans la paroi1, au bord interne de la base du biseau 2, surmonté longitudinalement par une lamelle d'encliquetage 81. Ce système trouve symétriquement sa moulure 82 sur la face adjacente au biseau, de manière à ce qu'en position véhicule, les deux bords puissent s'emboîter et rester ainsi en position définitive.

La figure 4A présente une vue en coupe d'un moule destiné à fabriquer des enveloppes de protection thermique à une seule charnière. L'enveloppe constituée de plusieurs parties assemblées par une charnière permet un moulage en une forme pour limiter les dimensions de l'outillage de moulage. Elle nécessite un outillage constitué de trois pièces de moulage 90, 91, 92, et d'une pièce mobile 901, servant à la compression de ladite charnière. Le procédé comprend les étapes suivantes :
- Formation d'un moule de forme définissant deux parties pliables au niveau d'une zone rétrécie destinée à former la charnière,
- Injecter un matériau polymère dans le moule, et
- renforcer la charnière avec un point de compression.

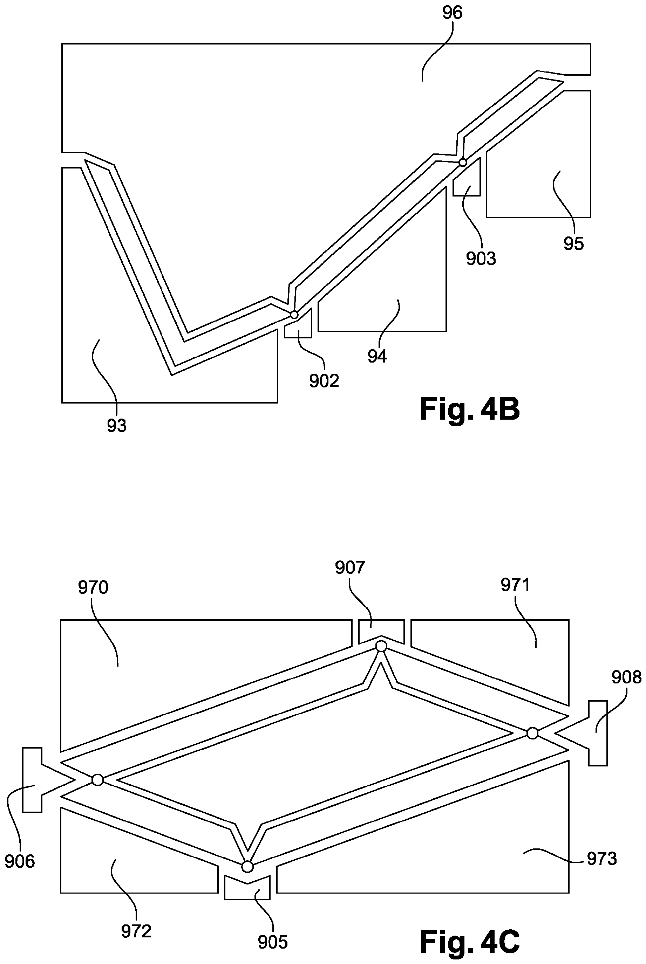

La figure 4B représente une vue en coupe d'un moule destiné à fabriquer des enveloppes de protection thermique à deux charnières. Elle nécessite un outillage constitué de quatre pièces de moulage 93, 94, 95, 96, et de deux pièces mobiles 902 903, servant à la compression des deux charnières. Le procédé comprend les étapes suivantes :
- Formation d'un moule de forme définissant trois parties pliables au niveau d'une zone rétrécie destinée à former les deux charnières,
- Injecter un matériau polymère dans le moule, et
- renforcer les deux charnières avec un point de compression.

La figure 4C représente une vue en coupe d'un moule destiné à fabriquer des enveloppes de protection thermique à quatre charnières. Elle nécessite un outillage constitué de quatre pièces de moulage 970, 971, 972, 973, et de deux pièces mobiles 905, 907, servant à la compression simple des deux charnières et de deux autres pièces mobiles, spécialement sculptées pour réaliser la moulure du système de verrou à clips 906, 908. Le procédé comprend les étapes suivantes :
- Formation d'un moule de forme définissant quatre parties pliables au niveau d'une zone rétrécie destinée à former les quatre charnières,
- Injecter un matériau polymère dans le moule, et
- Renforcer les deux charnières simples avec un point de compression.
- Renforcer les deux charnières à verrou avec un point de compression, à l'aide de pièces du moule intégrant les reliefs permettant de créer les systèmes de verrou cités précédemment.

## Revendications

1. Dispositif de protection thermique en matériau polymère, destiné à recouvrir une batterie de véhicule automobile, comportant une enveloppe de protection thermique (12) comprenant au moins deux parties (12') et (12") pliables dont la liaison est articulée autour d'une charnière (3'), l'enveloppe pouvant passer par pliage et dépliage d'une position de rangement à une position fonctionnelle, **caractérisé en ce que** ledit dispositif est constitué de deux éléments séparés, un couvercle et ladite enveloppe de protection thermique (12), ladite enveloppe étant destinée, par fixation sur le socle support batterie (11) assurant sa forme, à recouvrir la batterie de véhicule automobile, et **en ce que** le matériau polymère est du polypropylène expansé de densité inférieure ou égale à 80 g/L.

2. Dispositif de protection thermique selon la revendication 1, **caractérisée en ce que** les bords (2) de chaque paroi (1) de ladite enveloppe, lorsqu'ils viennent en butée, peuvent être bloqués par emboîtement par un système de verrou.

3. Dispositif de protection thermique selon l'une des revendications 1 ou 2, **caractérisée en ce que** ladite enveloppe comprend une à quatre charnières (3'), dont au moins une charnière peut être fermée par un système de verrou.

4. Dispositif de protection thermique selon l'une des revendications 2 ou 3, **caractérisée en ce que** le système de verrou est un système à clips.

5. Dispositif de protection thermique selon la revendication 4 **caractérisée en ce que** le système à clips est un système de picots (6) destiné à s'emboîter dans une encoche correspondante sur la paroi adjacente opposée.

6. Dispositif de protection thermique selon la revendication 4 **caractérisée en ce que** le système de clips comprend sur au moins un tenon vertical ou horizontal (51) une lamelle d'encliquetage (53, 81) située sur ledit tenon et ladite lamelle d'encliquetage trouvant son encoche correspondante (52) sur la paroi adjacente.

7. Dispositif de protection thermique selon l'une des revendications précédentes **caractérisée en ce qu'**elle comprend en outre un socle destiné à supporter l'élément batterie (4) et un couvercle (13) destiné à recouvrir l'élément batterie (4).

8. Procédé de fabrication du dispositif de protection thermique selon l'une quelconque des revendications 1 à 7, **caractérisé en ce que** le moule de forme définit au moins deux parties pliables au niveau d'une zone rétrécie destinée à former la charnière (3').

## Patentansprüche

1. Wärmeschutzvorrichtung aus Polymermaterial, die eine Kraftfahrzeugbatterie bedecken soll, mit einer Wärmeschutzhülle (12) mit mindestens zwei faltbaren Abschnitten (12') und (12"), deren Verbindung um ein Gelenk (3') gelenkig gelagert ist, wobei die Hülle durch Falten und Entfalten von einer Verstauposition in eine Funktionsposition übergehen kann, **dadurch gekennzeichnet, dass** die Vorrichtung aus zwei getrennten Elementen, einem Deckel und der Wärmeschutzhülle (12), gebildet ist, wobei die Hülle durch Befestigung am Batterieträgersockel (11), der ihre Form sicherstellt, die Kraftfahrzeugbatterie bedecken soll, und dass das Polymermaterial aus expandiertem Polypropylen mit einer Dichte geringer als oder gleich 80 g/l besteht.

2. Wärmeschutzvorrichtung nach Anspruch 1, **dadurch gekennzeichnet, dass** die Ränder (2) jeder Wand (1) der Hülle, wenn sie zur Anlage kommen, durch Ineinanderstecken durch ein Verriegelungssystem blockiert werden können.

3. Wärmeschutzvorrichtung nach einem der Ansprüche 1 oder 2, **dadurch gekennzeichnet, dass** die Hülle ein bis vier Gelenke (3') umfasst, von denen mindestens ein Gelenk durch ein Verriegelungssystem geschlossen werden kann.

4. Wärmeschutzvorrichtung nach einem der Ansprüche 2 oder 3, **dadurch gekennzeichnet, dass** das Verriegelungssystem ein Klammersystem ist.

5. Wärmeschutzvorrichtung nach Anspruch 4, **dadurch gekennzeichnet, dass** das Klammersystem ein Stiftsystem (6) ist, das sich in eine entsprechende Kerbe an der gegenüberliegenden benachbarten Wand einfügen soll.

6. Wärmeschutzvorrichtung nach Anspruch 4, **dadurch gekennzeichnet, dass** das Klammersystem an mindestens einem vertikalen oder horizontalen Zapfen (51) eine Einrastlamelle (53, 81) umfasst, die an dem Zapfen liegt, und wobei die Einrastlamelle ihre entsprechende Kerbe (52) an der benachbarten Wand findet.

7. Wärmeschutzvorrichtung nach einem der vorangehenden Ansprüche, **dadurch gekennzeichnet, dass** sie außerdem einen Sockel, der das Batterieelement (4) abstützen soll, und einen Deckel (13), der das Batterieelement (4) bedecken soll, umfasst.

8. Verfahren zur Herstellung der Wärmeschutzvorrichtung nach einem der Ansprüche 1 bis 7, **dadurch gekennzeichnet, dass** die Gießform mindestens zwei Abschnitte definiert, die auf der Höhe einer verengten Zone faltbar sind, die ein Gelenk (3') bilden soll.

## Claims

1. Thermal protection device made of polymer material, designed to cover an automobile vehicle battery, including a thermal protection envelope (12) comprising at least two foldable parts (12') and (12") whose attachment is articulated about a hinge (3'), the envelope being able to go, by folding and unfolding, from a stowed position to a functional position, **characterized in that** said device is composed of two separate elements, a cover and said thermal protection envelope (12), said envelope being designed, by fixing onto the battery support base (11) providing its shape, to cover the automobile vehicle battery, and **in that** the polymer material is expanded polypropylene with a density less than or equal to 80g/L.

2. Thermal protection device according to Claim 1, **characterized in that** the edges (2) of each wall (1) of said envelope, when they are abutted together, can be blocked by interlocking by a locking system.

3. Thermal protection device according to either of Claims 1 and 2, **characterized in that** said envelope comprises one to four hinges (3'), of which at least one hinge can be closed by a locking system.

4. Thermal protection device according to either of Claims 2 and 3, **characterized in that** the locking system is a system using fasteners.

5. Thermal protection device according to Claim 4, **characterized in that** the system using fasteners is a system of spikes (6) designed to engage into a corresponding notch on the opposing adjacent wall.

6. Thermal protection device according to Claim 4, **characterized in that** the system of fasteners comprises, on at least one vertical or horizontal spigot (51), a click-fit flap or tab (53, 81) situated on said spigot and said click-fit flap or tab finding its corresponding notch (52) on the adjacent wall.

7. Thermal protection device according to one of the preceding claims, **characterized in that** it furthermore comprises a base designed to support the battery element (4) and a cover (13) designed to cover the battery element (4).

8. Method of fabrication of the thermal protection device according to any one of Claims 1 to 7, **characterized in that** the shaping mold defines at least two foldable parts on a shrunken area designed to form the hinge (3').
